# EUROPÄISCHE PATENTANMELDUNG

(11) **EP 2 648 103 A2**
(43) Veröffentlichungstag der Anmeldung: **09.10.2013**
(21) Anmeldenummer: 13001509.2
(22) Anmeldetag: 25.03.2013
(51) Int. Cl.: G06F 11/22

(54) **Verfahren und Vorrichtung zur Integration von technischen Systemen**

(30) Priorität: 04.04.2012 DE 102012006872
(71) Anmelder: MBDA Deutschland GmbH, 86529 Schrobenhausen (DE)
(72) Erfinder: Grabmeier, Michael, D-83022 Rosenheim (DE)

(57) **Zusammenfassung**

Ein Verfahren zur Integration von technischen Systemen mit einer Mehrzahl von funktionalen Komponenten, die zur Kommunikation mit einem Zentralrechner des technischen Systems ausgebildet und unter Ausbildung von Schnittstellen mit diesem zum Datenaustausch verbindbar sind, wobei zumindest ein Komponentensimulator und zumindest ein Zentralrechnersimulator vorgesehen sind, zeichnet sich aus durch die Schritte:
- Bereitstellen des Zentralrechners und der jeweiligen Komponente;
- Testen der Funktionsfähigkeit des Zentralrechners mit einem jeweiligen Komponentensimulator in Bezug auf das Kommunikationsverhalten des Zentralrechners an der zugeordneten Komponentenschnittstelle;
- Testen der Funktionsfähigkeit einer jeden Komponente mit zumindest einem Zentralrechnersimulator in Bezug auf das Kommunikationsverhalten der Komponente an deren Zentralrechnerschnittstelle;
- Integration der gestesteten Komponenten mit dem gestesteten Zentralrechner.

## Beschreibung

### TECHNISCHES GEBIET

Die vorliegende Erfindung betrifft ein Verfahren zur Integration von technischen Systemen gemäß dem Oberbegriff des Patentanspruchs 1. Sie betrifft weiterhin eine Vorrichtung zur Integration von technischen Systemen gemäß dem Oberbegriff von Patentanspruch 4.

### HINTERGRUND DER ERFINDUNG

Komplexe technische Systeme wie beispielsweise Kraftfahrzeuge, Luftfahrzeuge oder auch Waffensysteme bestehen aus einer Vielzahl von funktionalen Komponenten, die von unterschiedlichen Herstellern als Zulieferteile gefertigt werden und die von einem übergeordneten Hersteller (Systemintegrateur) zum funktionalen Ganzen zusammengesetzt werden. In diesen so entstehenden komplexen technischen Systemen interagieren die Komponenten nicht nur mechanisch und elektrisch miteinander, sondern es findet ein reger Datenaustausch zwischen den einzelnen Komponenten, genauer gesagt zwischen Datenverarbeitungseinrichtungen und Sensoren sowie Aktoren der einzelnen Komponenten, mit entsprechenden Elementen anderer Komponenten und/oder einer zentralen Datenverarbeitungseinrichtung, dem Zentralrechner, des technischen Systems statt. Diese Datenkommunikation zwischen den einzelnen Komponenten und dem Zentralrechner erfolgt nicht nur auf Hardwareebene, sondern auch auf Softwareebene. Es muss dabei gewährleistet sein, dass diese Interaktionen funktionieren und nicht zu Fehlern im Ablauf der Betriebsfunktionalität des gesamten technischen Systems führen. Es bedarf daher bei der Planung und Entwicklung des technischen Systems einer exakten Schnittstellendefinition zwischen den einzelnen Komponenten und dem Zentralrechner, die nicht nur eine mechanische Schnittstellendefinition oder eine elektrische Schnittstellendefinition ist, sondern vor allen Dingen eine softwarebezogene Schnittstellendefinition beinhalten muss. Hier ist es jedoch häufig so, dass aufgrund des Zeitdrucks bei der Planung und Entwicklung die Dokumentation der Softwareentwicklung und die Schnittstellendefinition der Software-Schnittstellen lückenhaft ist, so dass es häufig bei der abschließenden Integration der einzelnen Komponenten zum gesamten technischen System zu funktionalen Fehlern kommt, die mühsam durch Nachbearbeitung an den einzelnen Komponenten und ihrer Software beziehungsweise an der Software des Zentralrechners führt. Dadurch wird die Systemintegration erheblich verzögert und die Projektkosten steigen in nicht unerheblichem Maß.

### STAND DER TECHNIK

Die derzeit übliche Vorgehensweise bei der Integration von komplexen technischen Systemen verlässt sich darauf, dass sämtliche Schnittstellen zwischen den einzelnen Komponenten und dem Hauptrechner richtig und vollständig spezifiziert worden sind und dass sämtliche Spezifikationen der einzelnen Komponenten korrekt in Hardware und Software implementiert worden sind. Dabei verlassen sich die jeweiligen Hersteller auf ihr zertifiziertes Qualitätssystem. Ausgehend von diesen angenommenen Voraussetzungen wird üblicherweise ein Integrationszeitplan aufgestellt, der auf den vorgenannten optimistischen Annahmen beruht. Der Systemintegrateur legt traditionell bei der Definition der Integrationshilfsmittel den Schwerpunkt auf die Herstellung von sogenannten Breakout-Boxen, die gemäß den verfügbaren Signalspezifikationen implementiert und zur Messung von Versorgungsspannungen oder Versorgungsströmen benutzt werden.

Häufig stellt sich aber beim ersten Zusammenschalten der einzelnen Komponenten heraus, dass die Interaktion zwischen den Komponenten untereinander beziehungsweise zwischen den Komponenten und dem Hauptrechner nicht in der gewünschten Weise funktioniert. Die Ursache für diese Fehlfunktionen lässt sich allerdings in der Regel nicht sofort feststellen, so dass zunächst kein Beweis erbracht werden kann, welcher Hersteller welcher Komponente für diesen Fehler verantwortlich ist. Bis zur Lösung dieses Problems vergeht erfahrungsgemäß eine übermäßig lange und für den Projektfortschritt ungenutzte Zeit. Treten solche Fehler nicht nur bei einer Komponente, sondern bei mehreren Komponenten auf, so addieren sich die entsprechenden Zeitverzögerungen häufig zu Zeitspannen, die den Fertigstellungstermin, der dem Systemintegrateur gesetzt worden ist, nicht einhalten lassen. Es wird dann erforderlich, Revisionen beziehungsweise Neuplanungen vorzunehmen, die schließlich wieder von den einzelnen Herstellern zu realisieren sind. Da diese Zeitverzögerungen sämtlich während der Integration auftreten, wird zunächst der Systemintegrateur als der für den Zeitverzug Verantwortliche angesehen.

Häufig fehlt auch ein klares Konzept für die bei einer Endabnahme des integrierten technischen Systems durchzuführende Tests und Prüfungen, so dass in der Regel ein technisches System an den Kunden ausgeliefert wird, bei welchem keine genaue Kenntnis über die wirkliche Funktionsfähigkeit und über den tatsächlichen Testreifegrad vorliegt. Kommt es dann beim Kunden zu Ausfällen oder Fehlern beim Einsatz des technischen Systems, so fallen diese wieder zunächst auf den Systemintegrateur zurück.

Es ist daher anzustreben, ein Verfahren zur Integration von technischen Systemen zu schaffen, bei welchem diese Nachteile des Standes der Technik vermieden werden und durch welches eine höhere technisch-funktionale Zuverlässigkeit des Gesamtsystems erzielt wird.

### DARSTELLUNG DER ERFINDUNG

Es ist daher die Aufgabe der vorliegenden Erfindung, ein Verfahren zur Integration von technischen Systemen anzugeben, bei welchem die Zuverlässigkeit der Funktion der einzelnen Komponenten in Bezug auf deren Zusammenwirken so weit verbessert ist, dass die Wahrscheinlichkeit des Auftretens von Fehlern bei der Systemintegration deutlich reduziert ist und dass die Wahrscheinlichkeit der Erkennung von Fehlfunktionen erhöht wird.

Eine weitere Aufgabe ist es, eine Vorrichtung zur Integration von technischen Systemen anzugeben, die die Durchführung des erfindungsgemäßen Verfahrens ermöglicht.

Der das Verfahren betreffende Teil der Aufgabe wird gelöst durch das Verfahren mit den Merkmalen des Patentanspruchs 1.

Dieses erfindungsgemäße Verfahren zur Integration von technischen Systemen mit einer Mehrzahl von funktionalen Komponenten, die zur Kommunikation mit einem Zentralrechner des technischen Systems ausgebildet und unter Ausbildung von Schnittstellen mit diesem zum Datenaustausch verbindbar sind, wobei zumindest ein Komponentensimulator und zumindest ein Zentralrechnersimulator vorgesehen sind, umfasst die folgenden Schritte:
- Bereitstellen des Zentralrechners und der jeweiligen Komponente;
- Testen der Funktionsfähigkeit des Zentralrechners mit einem jeweiligen Komponentensimulator in Bezug auf das Kommunikationsverhalten des Zentralrechners an der zugeordneten Komponentenschnittstelle;
- Testen der Funktionsfähigkeit einer jeden Komponente mit zumindest einem Zentralrechnersimulator in Bezug auf das Kommunikationsverhalten der Komponente an deren Zentralrechnerschnittstelle;
- Integration der gestesteten Komponenten mit dem gestesteten Zentralrechner.

### VORTEILE

Diese frühzeitige Überprüfung der einzelnen Komponenten und des Zentralrechners mit entsprechenden Simulatoren, die das jeweilige funktionale Gegenstück im gesamten technischen System simulieren, ermöglicht es, bereits frühzeitig bei der Entwicklung und Planung sowie der Fertigung der einzelnen Komponenten beim Komponentenhersteller eine definierte Funktionalität der jeweiligen Komponente zu gewährleisten, die dann bei der Integration der einzelnen Komponenten und dem Zentralrechner zu einer fehlerfreien Funktion des gesamten technischen Systems führen.

Vorteilhaft ist dabei, wenn im Integrationsschritt zunächst der Zentralrechner mit daran angeschlossenen Komponentensimulatoren integriert und diese Gesamteinheit getestet wird und wenn anschließend aufeinanderfolgend jeweils ein Komponentensimulator durch eine Komponente ersetzt und dann ein weiterer Funktionstest der gesamten Einheit durchgeführt wird, bis alle Komponenten mit dem Zentralrechner zum Gesamtsystem verbunden worden sind. Dieses schrittweise Vorgehen mit jeweils einem Funktionstest nach dem Einbau einer neuen Komponente führt dazu, dass eventuell doch noch auftretende Fehler unmittelbar dieser Komponente oder dem Zusammenwirken dieser Komponente mit dem Zentralrechner zugeordnet werden können. Dadurch wird die Fehlersuche bei der Integration gegenüber einer Fehlersuche, die erst nach dem Einbau aller Komponenten durchgeführt wird, deutlich vereinfacht.

Vorzugsweise werden vor den jeweiligen Tests des Zentralrechners und/oder der Komponenten die jeweiligen Komponentensimulatoren gegen den zumindest einen Zentralrechnersimulator getestet. Diese Tests der Simulatoren gegeneinander, die das gesamte technische System beziehungsweise dessen Funktionalität virtuell abbilden, gewährleisten, dass die Simulatoren fehlerfrei arbeiten und so als zuverlässiger Referenzstandard für die Funktionalität der von ihnen jeweils simulierten Komponente dienen. Dadurch wird ausgeschlossen, dass bei der Durchführung des erfindungsgemäßen Verfahrens Fehler erzeugt werden, deren Ursachen im jeweiligen Simulator liegen.

Der auf die Vorrichtung gerichtete Teil der Aufgabe wird gelöst durch die Vorrichtung mit den Merkmalen des Patentanspruchs 4.

Diese Vorrichtung zur Integration von technischen Systemen bestehend aus einer Mehrzahl von funktionalen Komponenten, die zur Kommunikation mit einem Zentralrechner des technischen Systems ausgebildet und unter Ausbildung von Schnittstellen mit diesem zum Datenaustausch verbindbar sind, zeichnet sich dadurch aus, dass zumindest ein Komponentensimulator und zumindest ein Zentralrechnersimulator vorgesehen sind. Mit dieser erfindungsgemäßen Vorrichtung, die aus einer Mehrzahl von Simulatoren besteht, lassen sich die einzelnen Komponenten des technischen Systems bei der Durchführung des erfindungsgemäßen Verfahrens auf besonders zuverlässige Weise testen. Besonders bevorzugt ist dabei eine Ausgestaltung der Vorrichtung, bei welcher für jede Komponente ein Simulator-Paar bestehend aus einem Komponentensimulator und einem Komponenten-Zentralrechnersimulator, der gegenüber dieser Komponente die relevanten Funktionen des Zentralrechners simuliert, vorgesehen ist.

Die Grundidee der vorliegenden Erfindung liegt somit darin, virtuelle Spiegelbilder der Funktionalität der jeweiligen Komponente des technischen Systems und des Zentralrechners des technischen Systems als entsprechende Simulatoren dem Systemintegrateur bereitzustellen und dann bereits in einem frühzeitigen Stadium, spätestens jedoch bei der Komponentenherstellung, die Komponente gegen den ihr jeweils zugeordneten Zentralrechnersimulator beziehungsweise den Zentralrechner gegen die einzelnen Komponentensimulatoren zu testen, um so eventuelle Fehler bereits in einem frühzeitigen Stadium beim Hersteller der jeweiligen Komponente beziehungsweise des Zentralrechners festzustellen und zu vermeiden, dass derartige Fehler erst im Zuge der Integration beim Systemintegrator erkannt werden. Es wird auf diese Weise gewährleistet, dass die zum Systemintegrator gelieferten Komponenten und gegebenenfalls auch - falls der Systemintegrator nicht selbst Hersteller des Zentralrechners ist - der zum Systemintegrator gelieferte Zentralrechner an seiner jeweiligen Schnittstelle eine definierte und vorab geprüfte Funktionalität aufweist, so dass bei der Systemintegration Schnittstellenfehler so gut wie ausgeschlossen sind.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Schaubild eines komplexen technischen Systems am Beispiel eines Waffensystems;
- Fig. 2: ein Beispiel eines Simulator-Paars;
- Fig. 3: ein Beispiel einer Paarung aus Simulator und einer realen Komponente des technischen Systems;
- Fig. 4: ein Beispiel eines Zentralrechners mit angeschlossenen Komponenten-Simulatoren;
- Fig. 5: ein Beispiel einer schrittweisen Integration einer ersten Komponente in das Gesamtsystem;
- Fig. 6: das Beispiel aus Fig. 5 als fortgeschritten integriertes Gesamtsystem;
- Fig. 7: ein Beispiel einer Fehlersuche in einem Gesamtsystem gemäß Fig. 6;
- Fig. 8: ein Beispiel einer Überprüfung einer Komponente im integrierten Gesamtsystem;
- Fig. 9: ein weiteres Beispiel einer Fehlersuche im integrierten Gesamtsystem;
- Fig. 10: ein Beispiel eines aus Simulatoren gebildeten Referenz-Systems;
- Fig. 11: ein Beispiel der Integration eines nach dem erfindungsgemäßen Verfahren gebildeten technischen Systems in ein übergeordnetes System und
- Fig. 12: ein weiteres Beispiel einer Integration des erfindungsgemäßen technischen Systems mit einem Simulator eines übergeordneten System.

### DARSTELLUNG VON BEVORZUGTEN AUSFÜHRUNGSBEISPIELEN

Das erfindungsgemäße Verfahren zur Integration von technischen Systemen sowie die zugehörige Vorrichtung werden nachstehend anhand eines Beispiels aus der Militärtechnik gezeigt, wobei das zu integrierende technische System ein Waffensystem 1 ist, das als Subsystem eine Waffenanlage 2 aufweist, die ebenfalls nach dem erfindungsgemäßen Verfahren zur Integration von technischen Systemen, also hier des Subsystems Waffenanlage, integriert wird. Auch wenn nachstehend die vorliegende Erfindung anhand eines Waffensystems gezeigt und beschrieben wird, so ist die Erfindung nicht auf den militärtechnischen Bereich und insbesondere nicht auf Waffensysteme beschränkt, sondern ist auf alle technischen Systeme mit komplexer Kommunikations- und Interaktionsstruktur anwendbar.

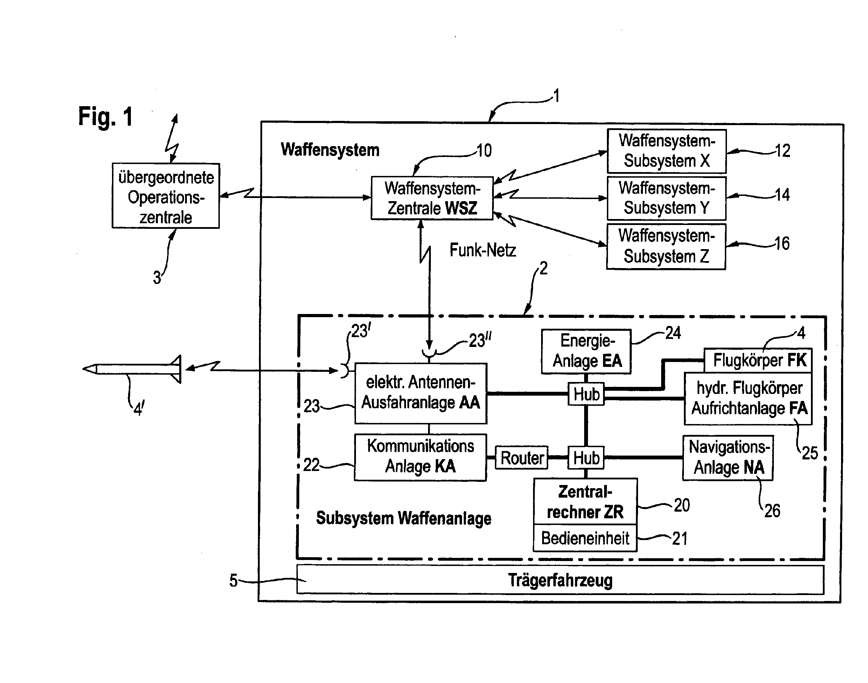

Das in Fig. 1 als Systemarchitektur-Schaubild dargestellte Waffensystem 1 umfasst eine Waffensystemzentrale 10 sowie mehrere Waffensystem-Subsysteme 12, 14, 16, die mit der Waffensystemzentrale 10 über Datenkommunikationsverbindungen verbunden sind. Des Weiteren weist das Waffensystem 1 das Subsystem Waffenanlage 2 auf, welches ebenfalls mit der Waffensystemzentrale über eine Datenübertragungsverbindung zum Datenaustausch verbunden ist. Die Waffenanlage 2 ist beispielsweise auf einem Trägerfahrzeug 5 montiert.

Die Waffensystemzentrale 10 des Waffensystems 1 ist über eine weitere Datenübertragungsverbindung mit einer übergeordneten Operationszentrale 3 zum Datenaustausch verbunden. Die genannten Datenübertragungsverbindungen können drahtgebundene oder drahtlose Datenübertragungsverbindungen sein.

Das Subsystem Waffenanlage 2 weist einen Zentralrechner 20 mit einer Bedieneinheit 21, eine Kommunikationsanlage 22, eine elektrisch oder hydraulisch betriebene Antennen-Ausfahranlage 23 mit einer ersten Antenne 23' und einer zweiten Antenne 23", eine Energieanlage 24, eine Flugkörper-Aufrichtanlage 25 für zumindest einen Flugkörper 4 und eine Navigationsanlage 26 auf. Diese einzelnen Anlage stehen über entsprechende Datenleitungen mit dem Zentralrechner 20 zur Datenübertragung in Verbindung.

Die erste Antenne 23' der Antennen-Ausfahranlage 23 ist zur Datenkommunikation mit einem bereits gestarteten Flugkörper 4' vorgesehen und die zweite Antenne 23" der Antennen-Ausfahranlage ist zur Datenkommunikation mit der Waffensystemzentrale 10 vorgesehen.

Diese Darstellung des Waffensystems 1 und des Subsystems Waffenanlage 2 zeigt die Komplexität der jeweiligen Systeme mit ihren einzelnen von den jeweiligen Anlagen gebildeten Komponenten, die aus unterschiedlichen Fertigungsbetrieben stammen und von einem Systemintegrateur zum Subsystem Waffenanlage 2 beziehungsweise dann anschließend zum gesamten Waffensystem 1 zu integrieren sind. Im Extremfall stellt der Systemintegrateur nur den Kabelbaum der Waffenanlage nach den vorgegebenen Signalspezifikationen her. Die einzelnen Komponenten der Waffenanlage werden von unterschiedlichen Herstellern nach der vorgegebenen Spezifikation entwickelt und nach deren eigenem Ermessen getestet und abgenommen. Diese einzelnen Komponenten der Waffenanlage werden dem Systemintegrateur mit mehr oder weniger großen Verspätungen zugeliefert; der Systemintegrateur hat jedoch eine feste Terminvorgabe für die Abgabe des gesamten komplexen Systems, hier der Waffenanlage.

Es stellen sich dadurch dem Systemintegrateur eine Vielzahl von Aufgaben, nämlich:
- Auf welche Weise sollen die einzelnen Komponenten und der Zentralrechner bei der Anlieferung getestet werden, so dass deren tatsächliche Funktionsweise und Integrationsfähigkeit feststellbar ist?
- Wie kann ein Zeitverzug verhindert werden, falls die Anlage nicht wie erwartet arbeitet oder defekt wird?
- Wie kann eine Komponente im eingebauten Zustand auf korrekte Funktion geprüft werden (z.B. nach Update von Hardware/Software) oder wie kann im eingebauten Zustand ein Funktionsdefekt untersucht werden?
- Wie kann im vorliegenden Fall eine integrierte Waffenanlage vor einem operationellen Schussversuch unter Feldbedingungen getestet werden, wobei die für den Schuss erforderliche Funktionskette auf originale Art arbeiten muss?

Es ist daher ein Integrationsverfahren anzugeben, das robust, zeitsparend und zielführend ist. Dabei ist zu klären, welche Integrationshilfsmittel benötigt werden und wie deren technische Merkmale beschaffen sein müssen, damit sie in der Erprobungs-, Produktions- und Nutzungsphase des gesamten Systems weiter benutzt werden können. Schließlich wäre es noch vorteilhaft, wenn diese Integrationshilfsmittel bei der Adaption des gesamten Systems an einen anderen Komponententyp weiterbenutzt werden könnten.

Dazu wird nach dem erfindungsgemäßen Verfahren zu jeder der Komponenten, also zu jeder der Anlagen, ein Komponentensimulator bereitgestellt und weiterhin wird ein Zentralrechnersimulator bereitgestellt.

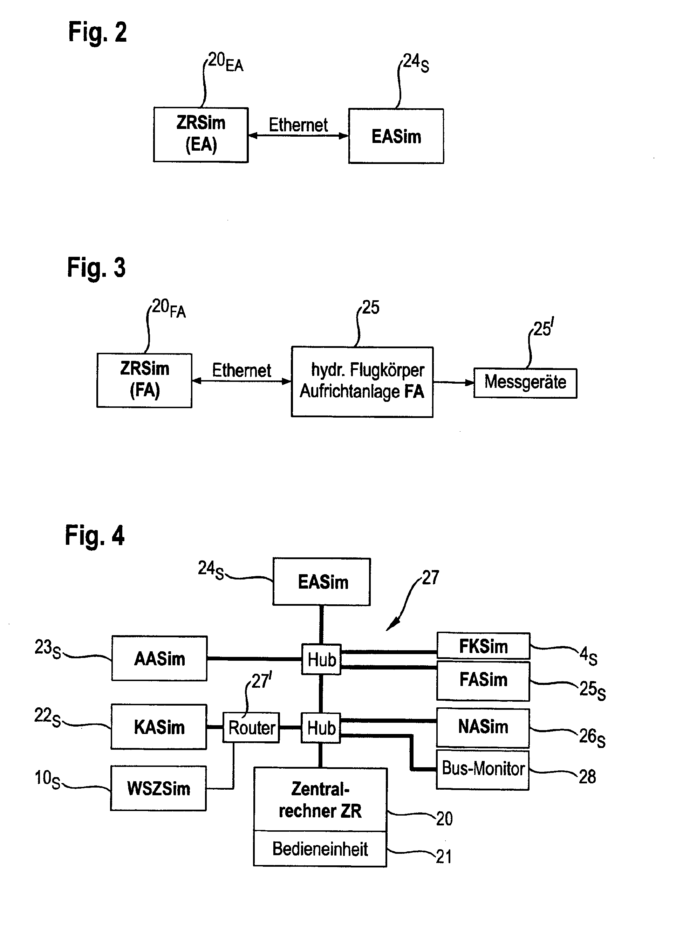

Fig. 2 zeigt eine Paarung aus dem Zentralrechnersimulator (EA) 20_{EA} und einem Energieanlagensimulator 24_{S}, die über eine Datenverbindung (Ethernet-Leitung) zum Datenaustausch miteinander verbunden sind. Der Zentralrechnersimulator (EA) 20_{EA} simuliert jenen Teil des Zentralrechners 20, der für die Kommunikation mit der Energieanlage 24 erforderlich ist. Der Energieanlagensimulator 24_{S} simuliert hingegen das Verhalten der Energieanlage an der Schnittstelle zum Zentralrechner beziehungsweise zu dem mit dem Zentralrechner verbundenen Datenbus. Lässt man diese beiden Simulatoren 20_{EA} und 24_{S}, wie in Fig. 2 dargestellt ist, miteinander kommunizieren und interagieren, so dürfen keine Fehler auftreten. Ist diese Fehlerfreiheit als Ergebnis der Entwicklung der Simulatoren erzielt worden, so können diese beiden Simulatoren als Komponenten- beziehungsweise Zentralrechner-Simulator und als Referenz für die Entwicklung der jeweiligen Komponente beziehungsweise des Zentralrechners eingesetzt werden. Der Hersteller der Energieanlage 24 erhält dazu den dieser Energieanlage zugeordneten Zentralrechnersimulator (EA) 20_{EA} und kann damit die von ihm entwickelte Energieanlage 24 dem spezifizierten Prüfverfahren unterziehen. Erfüllt die Energieanlage 24 dann die in der Spezifikation geforderten Eigenschaften und Leistungen und hat den Test mit dem Zentralrechnersimulator (EA) bestanden, kann sie an den Systemintegrateur übergeben werden.

In der gleichen Weise werden die folgenden Simulatorpaare gebildet: Zentralrechnersimulator (FA) und Flugkörperaufrichtanlagensimulator, Zentralrechnersimulator (NA) und Navigationsanlagensimulator, Zentralrechnersimulator (KA) und Kommunikationsanlagensimulator sowie Zentralrechnersimulator (AA) und Antennenausfahranlagensimulator.

Bevorzugt ist jeder Simulator PC-basiert, das heißt als Software implementiert, die auf einem Computer, beispielsweise einem Laptop ablaufbar gespeichert ist. Jeder Simulator implementiert das für ihn laut Spezifikation des gesamten technischen Systems definierte Kommunikationsprotokoll. Des Weiteren sind in der entsprechenden Simulationssoftware Fehleranalysetools eingebaut, die bei während eines Test auftretenden Fehlern eine entsprechende Fehlermeldung (zum Beispiel "unbekannte Message-ID", "falsche Message-Checksumme" oder "Verletzungen von Handshake-Protokollen") an einen Bediener ausgeben können. Weiterhin ist es vorteilhaft, wenn jeder Simulator eine manuelle Betriebsart ermöglicht, bei der ein entsprechender Bediener bestimmte Schritte des Simulationsablaufs von Hand auslösen oder Zustandsmeldungen manuell eingeben muss. Des Weiteren implementiert jeder Simulator anwählbare Automatismen (zum Beispiel einen Zustandsautomaten). Jeder Simulator weist eine messageorientierte Bedienoberfläche mit Fenstern zur Anzeige erhaltener Messages sowie mit Fenstern zum Setzen von Sende-Messages auf. Auch sind die Simulatoren dazu ausgelegt, die einzelnen Simulationsschritte aufzuzeichnen, zu protokollieren und mittels einer Replayfunktion wiederabzuspielen.

Fig. 3 zeigt wie ein Zentralrechnersimulator (im gezeigten Beispiel der Zentralrechnersimulator (FA) der Flugkörperaufrichtanlage) mit einer realen Flugkörperaufrichtanlage 25 über eine Ethernet-Verbindungsleitung zum Datenaustausch verbunden ist. Zudem sind an die reale Flugkörperaufrichtanlage 25 Messgeräte 25' angeschlossen. Dieser in Fig. 3 darstellte Testaufbau zeigt den beim Hersteller der Flugkörperaufrichtanlage durchzuführenden Endabnahmetest, nach dessen Bestehen die Flugkörperaufrichtanlage erst an den Systemintegrateur ausgeliefert werden darf.

Auch der Systemintegrateur setzt einen jeweiligen komponentenbezogenen Zentralrechnersimulator ein, um mit den vom jeweiligen Hersteller erhaltenen realen Komponenten eine Eingangsbefundung durchzuführen. Auf diese Weise ist gewährleistet, dass der Systemintegrateur nur korrekt funktionierende Komponenten bei der Integration des vollständigen technischen Systems einsetzt. Der Prüfaufbau der Eingangsbefundung entspricht dem in Fig. 3 gezeigten Testaufbau.

Fig. 4 zeigt den Ausgangspunkt einer nach dem erfindungsgemäßen Verfahren durchgeführten Integration. Der Zentralrechner 20 mit seiner Bedieneinheit 21 ist über die entsprechenden Leitungen des Kabelbaums beziehungsweise Datenbus' 27 verbunden. An diesem Datenbus 27 angeschlossen sind ein Kommunikationsanlagensimulator 22_{S}, ein Antennenausfahranlagensimulator 23_{S}, der Energieanlagensimulator 24_{S}, ein Flugkörperaufrichtanlagensimulator 25_{S} und ein Navigationsanlagensimulator 26_{S}. Des Weiteren ist ein Flugkörpersimulator 4_{S} an den Datenbus 27 und über diesen an den Zentralrechner 20 angeschlossen. Über einen im Datenbus 27 vorgesehenen Router 27' ist ein Waffensystemzentralensimulator 10_{S} an den Datenbus 27 angeschlossen und über diesen mit dem Zentralrechner 20 verbunden. Ein Bus-Monitor 28, der den Datenverkehr auf dem Datenbus 27 überwacht, ist ebenfalls an den Datenbus 27 angeschlossen.

Dieser in Fig. 4 gezeigte Aufbau entspricht zugleich dem Testaufbau beim Fertigungs-Endabnahmetest, den der Hersteller des Zentralrechners vor der Auslieferung an den Systemintegrateur durchzuführen hat. Mit diesem Testaufbau werden beim Zentralrechnerhersteller die Tests durchgeführt, die für die Überprüfung des korrekten Zusammenwirkens des Zentralrechners mit den einzelnen Komponenten erforderlich sind.

Ausgehend von dem in Fig. 4 gezeigten Aufbau wird, wenn der Zentralrechner die Eingangsbefundung beim Systemintegrateur, die ebenfalls mit diesem Testaufbau durchgeführt wird, überstanden hat, die Integration der einzelnen Komponenten durchgeführt. Dazu wird schrittweise ein Komponentensimulator nach dem anderen durch die jeweils zugeordnete reale Komponente ersetzt und nach jedem Ersetzen eines Komponentensimulators durch eine reale Komponente werden erneut die erforderlichen Tests durchgeführt, um die Funktionsfähigkeit des Gesamtsystems zu überprüfen. Erst wenn die Funktionsfähigkeit nach dem Einbau einer Komponente gewährleistet ist, wird der nächste Komponentensimulator durch die ihm zugeordnete reale Komponente ersetzt.

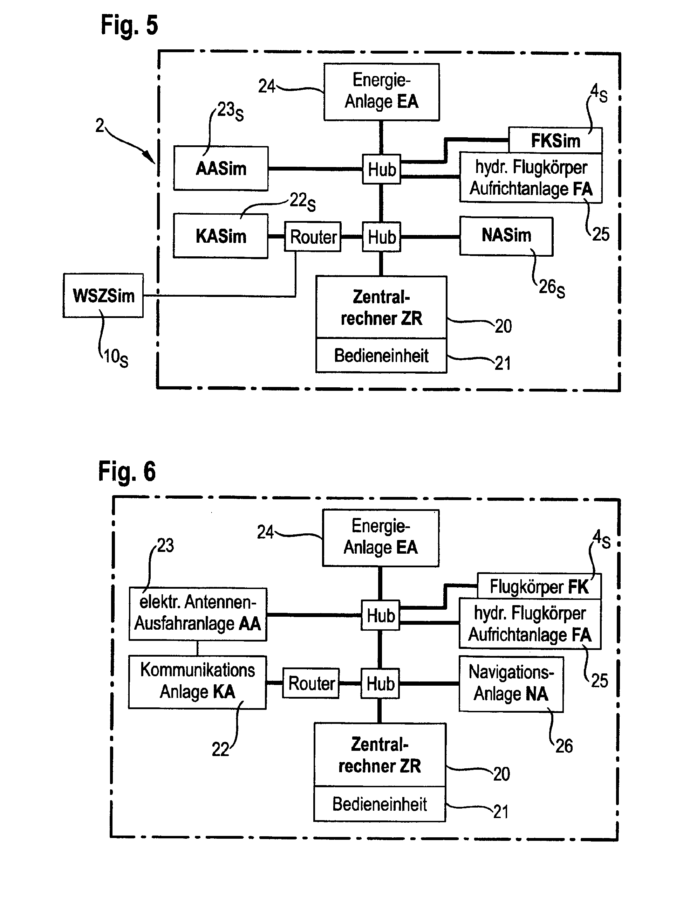

Fig. 5 zeigt ein solches in der Integration befindliches Subsystem Waffenanlage 2, bei welchem bereits der Energieanlagensimulator 24_{S} durch die reale Energieanlage 24 und der Flugkörperaufrichtanlagensimulator 25_{S} durch die reale Flugkörperaufrichtanlage 25 ersetzt worden sind.

In Fig. 6 ist ein nach dem erfindungsgemäßen Verfahren vollständig integriertes Subsystem Waffenanlage 2 gezeigt, bei welchem lediglich noch der Flugkörper durch den Flugkörpersimulator 4_{S} ersetzt ist.

Nachstehend wird nunmehr beschrieben, wie die erfindungsgemäße Vorrichtung, die als "Kit of Parts" aus einer Vielzahl von Komponentensimulatoren und zumindest einem Zentralrechnersimulator besteht, eingesetzt werden kann, um nach erfolgter Integration auftretende Fehler des technischen Systems (hier des Subsystems Waffenanlage 2) identifizieren zu können. Diese Art der Fehlersuche mit der erfindungsgemäßen Vorrichtung kann sowohl für Fehler eingesetzt werden, die im Laufe der Fertigstellung der Integration, beispielsweise bei einem Fertigungsendabnahmetest des Systemintegrateurs, oder während einer Schießkampagne oder die im späteren Betrieb des technischen Systems beim Endanwender auftreten.

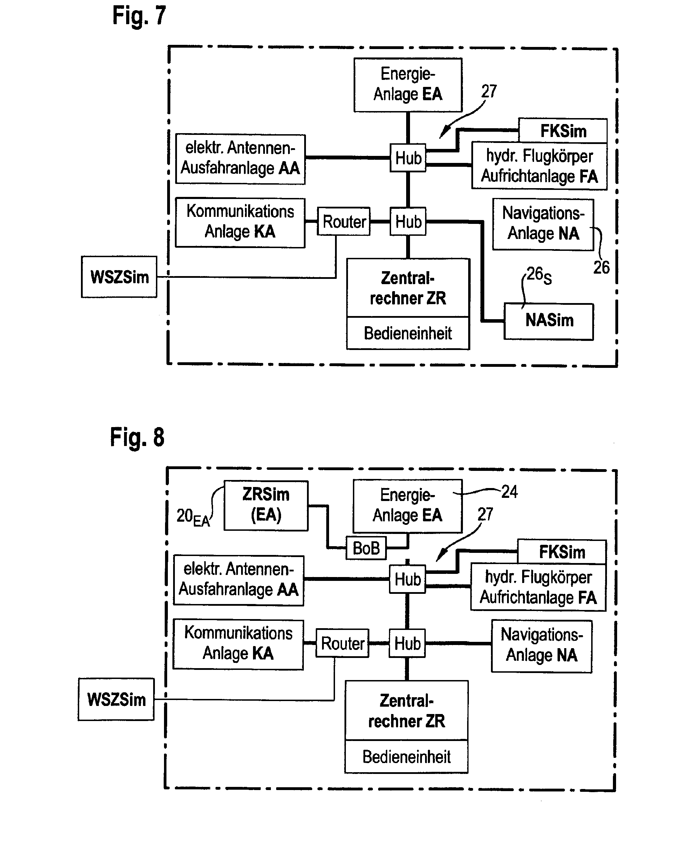

Wird vom Zentralrechner ein Fehler oder ein Ausfall einer Komponente erkannt und gemeldet, im gezeigten Beispiel der Fig. 7 ein Fehler bei der Kommunikation mit der Navigationsanlage 26, so wird diese Komponente aus dem Gesamtsystem herausgenommen, also vom Datenbus abgekoppelt, und statt ihr wird der entsprechende Komponentensimulator, im gezeigten Beispiel der Navigationsanlagensimulator 26_{S} mit dem Datenbus 27 verbunden. Anschließend werden entsprechende Tests und Prüfdurchläufe durchgeführt. Tritt der Fehler nun nicht mehr auf, so kann daraus geschlossen werden, dass die aus dem System entfernte Komponente (Navigationsanlage 26) defekt ist. Tritt jedoch der Fehler noch auf, so kann davon ausgegangen werden, dass nicht die Komponente defekt ist, sondern ein Defekt auf der Datenflussstrecke, also beispielsweise im Datenbus 27, oder im Zentralrechner vorliegt.

In diesem Zusammenhang ist es natürlich auch möglich, alternativ oder zusätzlich die aus dem System entfernte und mutmaßlich defekte Komponente mit dem ihr zugeordneten komponentenspezifischen Zentralrechnersimulator zu testen. Dies ist in Fig. 8 gezeigt, wo die Energieanlage 24 vom Datenbus 27 abgekoppelt und mit dem Zentralrechnersimulator (EA) 20_{EA} verbunden worden ist. Mit diesem Aufbau wird die mutmaßlich defekte Komponente (hier die Energieanlage 24) gegen den komponentenspezifischen Zentralrechnersimulator 20_{EA} getestet, wodurch festgestellt werden kann, ob sich die Komponente an ihrer Datenbus-Schnittstelle spezifikationsgerecht verhält oder welche detaillierten Fehlerinformationen die Komponente ausgibt.

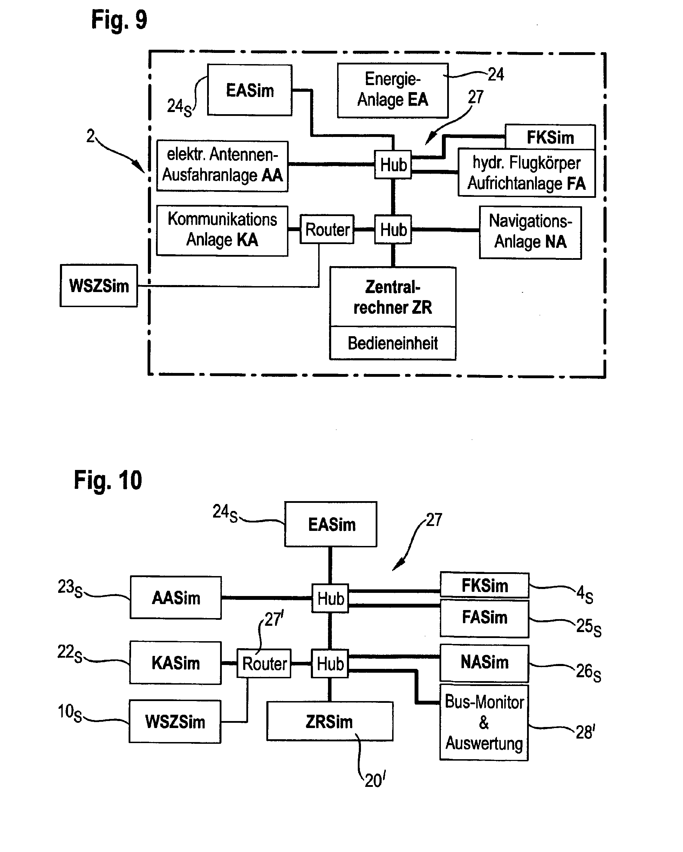

Im Anschluss daran kann - analog zu der in Verbindung mit Fig. 7 beschriebenen Vorgehensweise - der Energieanlagensimulator 24_{S} bei abgeklemmter Energieanlage 24 mit der dieser zugeordneten Schnittstelle des Datenbus' 27 verbunden werden, um dann das gesamte System (hier Subsystem Waffenanlage 2) zu testen (Fig. 9). Auf diese Weise kann durch Ausschließen einer oder mehrerer Komponenten aus dem technischen Gesamtsystem sowie durch Überprüfen der einzelnen Komponenten gegen ihren komponentenspezifischen Zentralrechnersimulator und durch Prüfen des gesamten Systems mit dem entsprechenden Komponentensimulator eine schnelle und sehr wirksame Fehlersuche durchgeführt werden.

Fig. 10 zeigt einen Aufbau eines virtuellen technischen Systems bestehend aus einem Zentralrechnersimulator 20_{S}, der die Funktionalitäten der einzelnen komponentenspezifischen Zentralrechnersimulatoren in sich vereint, sowie aus den entsprechenden Komponentensimulatoren 22_{S}, 23_{S}, 24_{S}, 25_{S}, 26_{S}. Der Zentralrechnersimulator 20_{S} und die Komponentensimulatoren 22_{S}, 23_{S}, 24_{S}, 25_{S}, 26_{S} sind über den Datenbus 27 miteinander zum Datenaustausch verbunden. Des Weiteren sind an den Datenbus - wie im Beispiel der Fig. 4 - der Flugkörpersimulator 4_{S}, der Waffensystemzentralensimulator 10_{S} und der Bus-Monitor 28' angeschlossen, der mit einer Auswerteeinrichtung versehen ist. Mittels dieses Simulatoraufbaus eines virtuellen technischen Systems kann das Ablauf- und Kommunikationsverhalten des realen Zentralrechners simuliert werden. Der Zentralrechnersimulator 20_{S} ist also, im Gegensatz zu den bisher beschriebenen komponentenspezifischen Zentralrechnersimulatoren in der Lage, das Verhalten des Systems mit allen angeschlossenen Komponenten zu prüfen, so dass mit einem solchen Zentralrechnersimulator 20_{S}, der beispielsweise in den in Fig. 6 gezeigten Endabnahmeaufbau des integrierten technischen Systems anstelle des dortigen Zentralrechners 20 eingebaut wird, das parallele Kommunikations- und Interaktionsverhalten der einzelnen Komponenten gegen den Zentralrechnersimulator 20_{S} getestet werden kann.

Dieser integrierte Zentralrechnersimulator 20_{S} kann daher vor Beginn der Integration genutzt werden, um zu überprüfen, ob die angelieferten realen technischen Komponenten in ihrer Gesamtheit in der gewünschten Weise parallel zueinander mit dem Zentralrechnersimulator 20_{S} (und gegebenenfalls untereinander) in korrekter Weise kommunizieren. Mit dem in Fig. 10 gezeigten Simulationsaufbau ist es auch möglich, auf Seiten des Systemintegrateurs vor Anlieferung der realen Komponenten konzipierte Prüfabläufe (zum Beispiel die Eingangsbefundung einzelner Komponenten, die Prüfung des Zentralrechners oder andere Systemprüfungen) zu verifizieren. Dies erlaubt es, dem Systemintegrateur bereits lange vor dem Eintreffen der realen Komponenten entsprechende Prüfvorschriften zu entwickeln und zu verifizieren.

Auch können mit dem in Fig. 10 dargestellten Simulationsaufbau Datenaufzeichnungs- und Auswertewerkzeuge, die bei späteren Tests Verwendung finden, auf ihre korrekte Funktion verifiziert und abgenommen werden. Außerdem kann mit diesem Simulationsaufbau das Verhalten von Software-Updates getestet werden, bevor diese Updates in den Zentralcomputer des realen Systems eingespielt werden. Schließlich ist es auch möglich, die bei einem realen technischen System aufgezeichneten Datenflüsse mit entsprechenden Datenflussaufzeichnungen des in Fig. 10 gezeigten virtuellen Systems zu vergleichen, um beispielsweise Schwachstellen oder Optimierungsmöglichkeiten untersuchen zu können.

Das in Fig. 10 dargestellte virtuelle System kann außerdem dazu verwendet werden, als Simulator des gesamten Subsystems Waffenanlage mit den übrigen Komponenten des in Fig. 1 gezeigten Waffensystems, beispielsweise der Waffensystemzentrale, zum Datenaustausch (beispielsweise über Funk) verbunden zu werden, um die Interaktion der Waffensystemzentrale mit dem Subsystem Waffenanlage zu überprüfen.

Nach der Freigabe der Schnittstellendefinition zwischen den einzelnen Komponenten und dem Hauptrechner und parallel zur Entwicklung der einzelnen Komponenten des Gesamtsystems werden die Komponentensimulatoren, die komponentenspezifischen Zentralrechner-Simulatoren, der integrierte Zentralrechnersimulator und die Datenaufzeichnungs- und Monitoringwerkzeuge implementiert. Damit stehen diese Test- und Prüfeinrichtungen bereits während der Fertigung der einzelnen Komponenten für Engineering-Tests zur Verfügung. Es erfolgt dabei die funktionale Überprüfung der in der Schnittstellendefinition festgelegten Datenflüsse und Abläufe mittels des in Fig. 10 dargestellten und aus Simulatoren bestehenden virtuellen technischen Systems. Werden bei diesen Vorabtests Defizite festgestellt, so können entsprechende Korrekturen sowohl bei der Schnittstellendefinition als auch bei der Funktionsweise der Simulatoren vorgenommen werden. Anschließend werden die Integrations-Prüfvorschriften mittels des in Fig. 10 dargestellten virtuellen Systems überprüft, die für die Komponenten-Eingangsbefundungen, die Prüfung des Zentralrechners und für die Systemprüfungen benutzt werden sollen. Auch hier kann gegebenenfalls noch eine Korrektur der Integrationsprüfvorschriften vorgenommen werden.

Im Zuge der Fertigung der einzelnen Komponenten wird jede Komponente des technischen Systems beim Hersteller der Komponente vor der Lieferung an den Systemintegrateur durch den jeweiligen komponentenspezifischen Zentralrechnersimulator nach der betreffenden Prüfvorschrift getestet. Bei negativem Prüfergebnis verweigert der Systemintegrateur die Annahme der Anlage und die aufgefundenen Fehler müssen zunächst behoben werden.

Nach Eingang der einzelnen Komponenten beim Systemintegrateur werden diese nochmals der entsprechenden Komponenten-Eingangsbefundung nach der festgelegten Prüfvorschrift unterzogen. Auch dabei können eventuell vorhandene Fehler identifiziert werden, woraufhin die Komponente zum Komponentenhersteller zur Fehlerbehebung zurückgesandt wird.

Beim Hersteller des Zentralrechners wird der Zentralrechner mit den Komponentensimulatoren verbunden und nach der entsprechenden Prüfvorschrift getestet. Treten dabei funktionale Probleme auf, werden mit dem in Fig. 10 gezeigten virtuellen System als Referenzanlage Referenztests durchgeführt, um die Problemtransparenz herzustellen. Gegebenenfalls ist der Zentralrechner einer Fehlerbehebung zu unterziehen. Nach dem Eingang des Zentralrechners beim Systemintegrateur wird auch hier wieder eine Eingangsbefundung in derselben Weise durchgeführt.

Zu Beginn des Integrationsprozesses wird der Zentralrechner mit den einzelnen Komponentensimulatoren verbunden und dann wird schrittweise ein Komponentensimulator nach dem anderen durch die entsprechende reale Komponente ersetzt und nach jedem schrittweisen Ersetzen eines Simulators durch die jeweilige reale Komponente werden erneut Systemprüfungen nach den Prüfvorschriften durchgeführt. Treten dabei technische Probleme einer Komponente auf, wird der Simulatorbetrieb als Referenz herangezogen. Nachdem alle Komponentensimulatoren durch die entsprechende Komponente ersetzt worden sind, bleiben lediglich die Simulatoren für die Waffensystemzentrale und für den Flugkörper mit dem integrierten System verbunden.

Es erfolgt anschließend die Integrations-Endabnahme, wobei alle Funktionen der aktuellen Ausbaustufe des technischen Systems, im gezeigten Beispiel des Subsystems Waffenanlage, einschließlich einer kompletten ferngesteuerten Schuss-Sequenz geprüft werden. Da bei diesem Endabnahmetest noch keine reale Waffensystemzentrale zur Verfügung steht, wird diese durch den Waffensystemzentralensimulator 10_{S} simuliert. Der Flugkörper wird ebenfalls durch den Flugkörpersimulator 4_{S} bis zur Schussauslösung simuliert.

Bevor das nunmehr integrierte Subsystem Waffenanlage 2 mit der Waffensystemzentrale 10 verbunden wird, erfolgt eine Überprüfung der Waffensystemzentrale 10. Dazu wird das in Fig. 10 dargestellte, aus Simulatoren bestehende Referenzsystem anstelle des im Beispiel der Fig. 10 vorgesehenen Waffensystemzentralensimulators 10_{S} mittels des drahtgestützten Datennetzwerks mit der realen Waffensystemzentrale 10 verbunden und die Interaktion zwischen der Waffensystemzentrale und dem virtuellen Subsystem Waffenanlage wird entsprechend der Prüfvorschriften getestet. Erst wenn dieser Test bestanden ist, wird die Waffensystemzentrale 10 mit dem realen Subsystem Waffenanlage 2 verbunden.

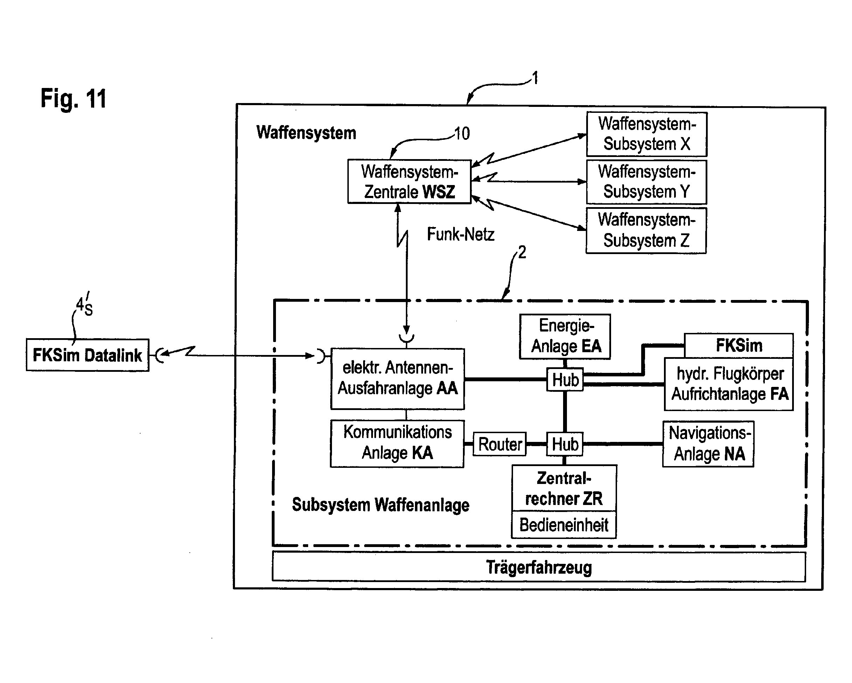

Es erfolgt dann die Systemprüfung des realen Subsystems Waffenanlage 2, wobei alle Funktionen der aktuellen Ausbaustufe des Subsystems einschließlich der kompletten ferngesteuerten Schuss-Sequenz geprüft werden. Dabei interagiert das integrierte Subsystem Waffenanlage 2 funkgestützt mit der Waffensystemzentrale 10. Bei diesen Tests wird der Flugkörper noch mittels des Flugkörpersimulators 4_{S} bis zur Schussauslösung simuliert. Nachdem der Flugkörper den Schussbehälter simuliert verlassen hat, wird eine Datenlink-Kommunikation zwischen dem Subsystem Waffenanlage mittels eines Flugkörper-Datenlink-Simulators 4'_{S} überprüft, wie in Fig. 11 zu sehen ist.

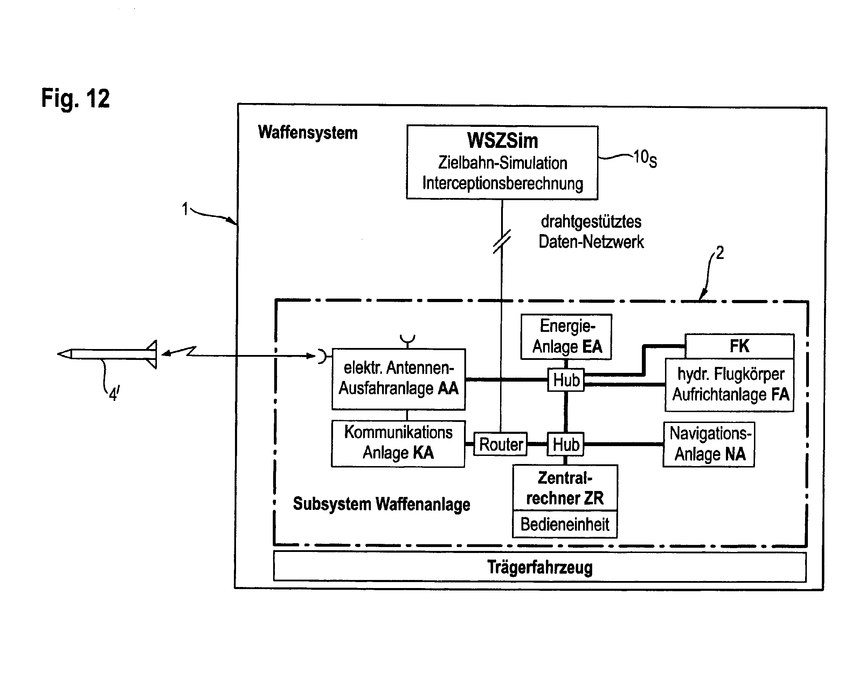

Im Rahmen einer späteren Schießkampagne wird ein realer Flugkörper, der sich noch im Transport- und Schussbehälter befindet, an die Flugkörperaufrichtanlage 25 des Subsystems Waffenanlage 2 angebaut. Dann erfolgt zunächst die Fernsteuerung und damit die Schussauslösung durch den Waffensystemzentralensimulator 10_{S}, der programmgesteuert die Ziel- und Interception-Daten berechnet und mittels des drahtgestützten Datennetzes an das Subsystem Waffenanlage 2 übermittelt, welches diese Daten funkgestützt an den fliegenden Flugkörper 4' weiterleitet. Dies ist in Fig. 12 dargestellt, welche einen Programmschuss mit einer wählbaren Zielbahn-Simulation wiedergibt.

Abschließend wird dann ein Schuss im Verbund des gesamten Waffensystems durchgeführt. Dabei erfassen und vermessen andere Waffensystem-Subsysteme das Ziel. Die Waffensystemzentrale 10 steuert das Subsystem Waffenanlage 2 fern, löst den Schuss aus und übermittelt dem fliegenden Flugkörper 4' via Waffenanlagen-Datenlink die Interception- und Zieldaten, die durch die anderen Waffensystem-Subsysteme ermittelt worden sind.

Diese vorgenannten Verfahrensschritte können iterativ in Teilen oder als Gesamtsequenz durchlaufen werden, wobei die einzelnen Simulatoren und die Datenmonitor- und Datenauswerte-Werkzeuge entsprechend angepasst werden können.

Werden die einzelnen Verfahrensschritte mehrfach durchlaufen, so erlangen die Komponentensimulatoren, die komponentenspezifischen Zentralrechnersimulatoren und der integrierte Zentralrechnersimulator einen validierten Status, das heißt sie besitzen ein die realen Komponenten beziehungsweise die realen Zentralrechner zuverlässig repräsentierendes Kommunikations- und Ablaufverhalten. Falls eine Komponente durch eine andere Komponente ersetzt werden soll (so genannte "plug-and-fight-Methode") kann die neue Komponente gegen die validierten Simulatoren entwickelt und im eingebauten und/oder ausgebauten Zustand getestet werden.

Die durch diese Integrations- und Erprobungsschritte iterativ verbesserten und überprüften Simulatoren können dann auch für die Produktionsprüfungen eingesetzt werden, und zwar für die Komponenten-Eingangsprüfung, die Zentralrechnerprüfung, die Waffenanlagen-Teilabnahmen und -Endabnahme. Außerdem können diese Simulatoren im Rahmen der Werksinstandsetzung für die Waffenanlagen-Eingangsbefundung, die Überprüfung nach einer Reparatur oder die Waffenanlagen-Endabnahme vor einer Wiederauslieferung an den Nutzer eingesetzt werden.

Zudem sind die einzelnen Simulatoren auch als Werkzeugsatz für die Außendienst-Instandsetzung geeignet. Der militärische Nutzer kann mittels feld- und militärtauglicher Waffensystemzentralensimulatoren und Flugkörpersimulatoren die Einsatzbereitschaft des Subsystems Waffenanlage vor einer Ankoppelung der Waffenanlage an das Waffensystemnetzwerk im Rahmen eines operationellen Waffenanlagen-Checks überprüfen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

### Es bezeichnen:

| | |
|---|---|
| 1 | Waffensystem |
| 2 | Subsystem Waffenanlage |
| 3 | Operationszentrale |
| 4 | Flugkörper |
| 4' | Flugkörper |
| 4_{S} | Flugkörpersimulator |
| 5 | Trägerfahrzeug8 |
| 10 | Waffensystemzentrale |
| 10_{S} | Waffensystemzentralensimulator |
| 12 | Waffensystem-Subsystem |
| 14 | Waffensystem-Subsystem |
| 16 | Waffensystem-Subsystem |
| 20 | Zentralrechner |
| 20_{EA} | komponentenspezifischer Zentralrechnersimulator (EA) |
| 20_{S} | Zentralrechensimulator |
| 21 | Bedieneinheit |
| 22 | Kommunikationsanlage |
| 22_{S} | Kommunikationsanlagensimulator |
| 23 | Antennen-Ausfahranlage |
| 23_{S} | Antennen-Ausfahranlagensimulator |
| 23' | erste Antenne |
| 23" | zweite Antenne |
| 24 | Energieanlage |
| 24_{S} | Energieanlagensimulator |
| 25 | Flugkörper-Aufrichtanlage |
| 25_{S} | Flugkörper-Aufrichtanlagensimulator |
| 26 | Navigationsanlage |
| 26_{S} | Navigationsanlagensimulator |
| 27 | Datenbus |
| 27' | Router |
| 28 | Bus-Monitor |
| 28' | Bus-Monitor |

## Patentansprüche

1. Verfahren zur Integration von technischen Systemen mit einer Mehrzahl von funktionalen Komponenten, die zur Kommunikation mit einem Zentralrechner des technischen Systems ausgebildet und unter Ausbildung von Schnittstellen mit diesem zum Datenaustausch verbindbar sind,
wobei zumindest ein Komponentensimulator und zumindest ein Zentralrechnersimulator vorgesehen sind,
**gekennzeichnet durch** die Schritte
- Bereitstellen des Zentralrechners und der jeweiligen Komponente;
- Testen der Funktionsfähigkeit des Zentralrechners mit einem jeweiligen Komponentensimulator in Bezug auf das Kommunikationsverhalten des Zentralrechners an der zugeordneten Komponentenschnittstelle;
- Testen der Funktionsfähigkeit einer jeden Komponente mit zumindest einem Zentralrechnersimulator in Bezug auf das Kommunikationsverhalten der Komponente an deren Zentralrechnerschnittstelle;
- Integration der gestesteten Komponenten mit dem gestesteten Zentralrechner.

2. Verfahren nach Anspruch 1,
**dadurch gekennzeichnet,**
**dass** im Integrationsschritt zunächst der Zentralrechner mit daran angeschlossenen Komponentensimulatoren integriert und die Gesamteinheit getestet wird und
**dass** anschließend aufeinanderfolgend jeweils ein Komponentensimulator durch eine Komponente ersetzt und dann ein weiterer Funktionstest der gesamten Einheit durchgeführt wird bis alle Komponenten mit dem Zentralrechner zum Gesamtsystem verbunden worden sind.

3. Verfahren nach Anspruch 1 oder 2,
**dadurch gekennzeichnet,**
**dass** vor den jeweiligen Tests des Zentralrechners und/oder der Komponenten die jeweiligen Komponentensimulatoren gegen den zumindest einen Zentralrechnersimulator getestet werden.

4. Vorrichtung zur Integration von technischen Systemen bestehend aus einer Mehrzahl von funktionalen Komponenten (22, 23, 24, 25, 26), die zur Kommunikation mit einem Zentralrechner (20) des technischen Systems (2) ausgebildet und unter Ausbildung von Schnittstellen mit diesem zum Datenaustausch verbindbar sind,
**dadurch gekennzeichnet,**
**dass** zumindest ein Komponentensimulator (22_{S}, 23_{S}, 24_{S}, 25_{S}, 26_{S} ) und zumindest ein Zentralrechnersimulator (20_{S}; 20_{EA},) vorgesehen sind.

5. Vorrichtung nach Anspruch 4,
**dadurch gekennzeichnet,**
**dass** für jede Komponente (24) ein Simulator-Paar bestehend aus einem Komponentensimulator (24_{S},) und einem Komponenten-Zentralrechnersimulator (20_{EA},), der gegenüber dieser Komponente (24) die relevanten Funktionen des Zentralrechners (20) simuliert, vorgesehen ist.
